# EUROPEAN PATENT APPLICATION

(11) **EP 4 642 117 A1**
(43) Date of publication of application: **29.10.2025**
(21) Application number: 22969020.1
(22) Date of filing: 23.12.2022
(51) Int. Cl.: H04W 64/00

(54) **MODEL MONITORING METHOD AND APPARATUS, AND ELECTRONIC DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN); HUANG, Yingpei, Dongguan, Guangdong 523860 (CN)
(74) Representative: Aldridge, Henry Alexander
(86) International application number: PCT/CN2022/141602
(87) International publication number: WO 2024/130733

(57) **Abstract**

Provided in the embodiments of the present application are a model monitoring method and apparatus, and an electronic device. The method comprises: a first device determining the performance of a first model according to the relationship between estimation information of a first terminal device and actual information, wherein the estimation information of the first terminal device is obtained by means of performing processing according to the first model.

## Description

### TECHNICAL FIELD

Embodiments of the present disclosure relate to the technical field of mobile communications, and in particular to a method and an apparatus for model monitoring, and an electronic device.

### BACKGROUND

Given the significant success of Artificial Intelligence (AI) technology or Machine Learning (ML) technology in areas such as computer vision and natural language processing, the field of communications has begun to explore the use of AI/ML technologies to seek new technical approaches to address problems that traditional methods have struggled with.

How to monitor the performance of AI/ML models in the field of communications has always been a concern in the art.

### SUMMARY

Embodiments of the present disclosure provide a method and an apparatus for model monitoring, and an electronic device.

Embodiments of the present disclosure provide a method for model monitoring, which includes the following operation.

A first device determines a performance of a first model based on a relationship between estimated information and actual information of a first terminal device. The estimated information of the first terminal device is obtained based on processing through the first model.

Embodiments of the present disclosure provide an apparatus for model monitoring, applied to a first device and including a determination unit.

The determination unit is configured to determine a performance of a first model based on a relationship between estimated information and actual information of a first terminal device. The estimated information of the first terminal device is obtained based on processing through the first model.

An electronic device provided by the embodiments of the present disclosure includes a processor and a memory. The memory is configured to store a computer program, and the processor is configured to call and execute the computer program stored in the memory to implement the above method.

A chip provided by the embodiments of the present disclosure is configured to implement the above method for model monitoring.

Specifically, the chip includes a processor, which is configured to call and execute a computer program in a memory to cause a device equipped with the chip to implement the above method for model monitoring.

A computer-readable storage medium provided by the embodiments of the present disclosure is configured to store a computer program that causes a computer to implement the above method for model monitoring.

A computer program product provided by the embodiments of the present disclosure, including computer program instructions that cause a computer to implement the above method for model monitoring.

A computer program provided by the embodiment of the present disclosure, when running on a computer, causes a computer to implement the above method for model monitoring.

In the method for model monitoring according to the embodiments of the present disclosure, the first device determines a performance of a first model based on a relationship between estimated information and actual information of a first terminal device. The estimated information of the first terminal device is obtained based on processing through the first model. In other words, the first device can compare the estimated information calculated by the first model with the actual information, and determine a performance of the first model based on the relationship between the estimated information and the actual information, so that the first model is switched and updated timely when the performance of the first model does not meet actual requirements, thereby ensuring the normal operation of services.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure, wherein:
FIG. 1 is a schematic communication diagram of a wireless communication system provided by an embodiment of the present disclosure.
FIG. 2A is a schematic diagram of a principle of a downlink-based positioning method provided by an embodiment of the present disclosure.
FIG. 2B is a schematic diagram of a principle of an uplink-based positioning method provided by an embodiment of the present disclosure.
FIG. 3 is a structural diagram of a neuron provided by a related art.
FIG. 4 is a structural diagram of a neural network provided by a related art.
FIG. 5 is a structural diagram of a convolutional neural network provided by a related art.
FIG. 6 is a structural diagram of a Long Short-Term Memory (LSTM) network provided by a related art.
FIG. 7 is a first schematic flowchart of a method for model monitoring provided by an embodiment of the present disclosure.
FIG. 8 is a second schematic flowchart of a method for model monitoring provided by an embodiment of the present disclosure.
FIG. 9A is a schematic diagram of a principle of direct positioning using a first model provided by an embodiment of the present disclosure.
FIG. 9B is a schematic diagram of a principle of assisted positioning using a first model provided by an embodiment of the present disclosure.
FIG. 10A is a third schematic flowchart of a method for model monitoring provided by an embodiment of the present disclosure.
FIG. 10B is a fourth schematic flowchart of a method for model monitoring provided by an embodiment of the present disclosure.
FIG. 11A is a fifth schematic flowchart of a method for model monitoring provided by an embodiment of the present disclosure.
FIG. 11B is a sixth schematic flowchart of a method for model monitoring provided by an embodiment of the present disclosure.
FIG. 12 is a structural composition diagram of an apparatus for model monitoring 1200 provided by an embodiment of the present disclosure.
FIG. 13 is a structural composition diagram of an electronic device provided by an embodiment of the present disclosure.
FIG. 14 is a structural diagram of a chip provided by an embodiment of the present disclosure.

### DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those of ordinary skill in the art without creative work fall within the scope of protection of the present disclosure.

In order to facilitate understanding of the technical solution of the embodiments of the present disclosure, related technologies of the embodiments of the present disclosure are described as follows, and the following related technologies can be arbitrarily combined with the technical solution of the embodiments of the present disclosure as an optional solution, all of which belong to the protection scope of the embodiments of the present disclosure.

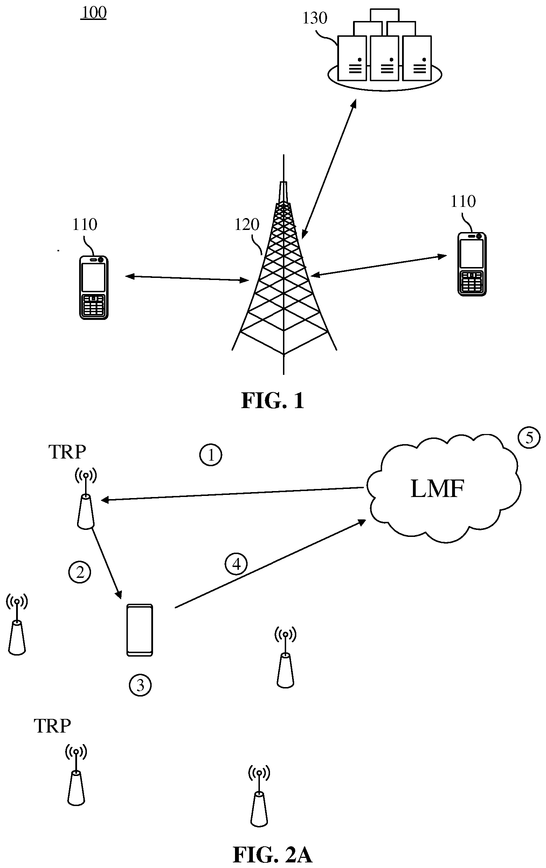

FIG. 1 is a schematic diagram of an application scenario according to an embodiment of the present disclosure.

As illustrated in FIG. 1, a communication system 100 may include terminal devices 110 and a network device 120. The network device 120 may communicate with the terminal devices 110 through an air interface. Multi-service transmission is supported between the terminal devices 110 and the network device 120.

It is to be understood that embodiments of the present disclosure are illustrative only with the communication system 100 but are not limited thereto. That is, the technical solution of the embodiments of the present disclosure can be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a NR communication system), or a future communication system, etc.

In the communication system 100 illustrated in FIG. 1, the network device 120 may be an access network device that communicates with the terminal devices 110. The access network device may provide communication coverage for a particular geographic area and may communicate with the terminal device(s) 110 (e.g. UE) located within the coverage area.

The network device 120 may be an Evolutional Node B (eNB or eNodeB) in a Long Term Evolution (LTE) system, or a gNB in a Next Generation Radio Access Network (NG RAN) device or an NR system, or a wireless controller in a Cloud Radio Access Network (CRAN). Or, the network device 120 may be a relay station, an access point, an in-vehicle device, a wearable device, a hub, a switch, a bridge, a router, or a network device in a future evolved Public Land Mobile Network (PLMN), etc.

The terminal device 110 may be any terminal device including but not limited to a terminal device in wired or wireless connection with the network device 120 or other terminal devices.

For example, the terminal device 110 may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

The terminal device 110 may be used for Device to Device (D2D) communication.

The wireless communication system 100 may also include a core network device 130 that communicates with the network device 120. The core network device 130 may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device. It is to be understood that SMF + PGW-C can achieve the same functions as SMF and PGW-C simultaneously. In the process of network evolution, the core network device may also be called by other names, or a new network entity may be formed by dividing the functions of the core network, which is not limited by the embodiments of the present disclosure.

Various functional units in the communication system 100 may also establish connections therebetween through a next generation (NG) interface to realize communication.

For example, the terminal device establishes an air interface connection with the access network device through an NR interface for transmitting user plane data and control plane signaling. The terminal device may establish a control plane signaling connection with an AMF through NG interface 1 (abbreviated as N1). The access network device, such as a next generation radio access base station (gNB), may establish a user plane data connection with a UPF through NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may exchange user plane data with a data network through NG interface 6 (abbreviated as N6). The AMF may establish a control plane signaling connection with the SMF through NG interface 11 (abbreviated as N11). The SMF may establish a control plane signaling connection with a PCF through NG interface 7 (abbreviated as N7).

FIG. 1 exemplarily illustrates a network device, a core network device and two terminal devices. Optionally, the wireless communication system 100 may include a plurality of network devices, and other numbers of terminal devices may be included within the coverage of each network device, which is not limited by embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B. It is to be understood that "correspond" in the description of embodiments of the present disclosure may mean that there is a direct correspondence or an indirect correspondence relationship between the two, may also mean that there is an association relationship between the two, may also be a relationship between indication and being indicated, configuration and being configured, etc. It should also be understood that the "predefined" or "predefined rules" referred to in embodiments of the present disclosure may be implemented by pre-storing corresponding codes, tables, or other manners that may be used to indicate related information in devices (e.g., including terminal devices and network devices), the specific implementation of which is not limited by the present disclosure. For example, predefined may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited herein.

In order to facilitate understanding of the technical solution of the embodiments of the present disclosure, related technologies of the embodiments of the present disclosure are described as follows. The following related technologies may be arbitrarily combined with the technical solution of the embodiments of the present disclosure as optional solutions, all of which belong to the protection scope of the embodiments of the present disclosure.

In practical applications, methods for positioning of a terminal device may include the following categories:

UE-based positioning method: that is, the terminal device calculates a location of a target UE directly.

UE-assisted/Location Management Function (LMF)-based positioning method: the terminal device reports a measurement result(s) to LMF, and the LMF calculates the location of the target UE based on the collected measurement result(s).

NG-RAN node-assisted positioning method: the base station reports a measurement result(s) from the Transmission/Reception Point(s) (TRP) in a network to LMF, and the LMF calculates the location of the target UE based on the collected measurement result(s).

It is to be noted that a plurality of TRPs around the terminal device may participate in positioning of a location. A base station may be a TRP, or there may be a plurality of TRPs deployed under a base station. The LMF may be a positioning server responsible for an entire positioning process.

In traditional positioning methods, traditional algorithms, such as a Chan algorithm, a Taylor expansion, etc., are adopted by the terminal device or LMF to estimate the location of the terminal device.

The following describes a downlink-based positioning method and an uplink-based positioning method respectively.

Referring to FIG. 2A, the downlink-based positioning method may include the following steps.

In step 1, LMF notifies TRP of a related configuration.

The related configuration may include configuration information of a positioning reference signal (PRS), and/or a type of measurement results that the terminal device needs to report.

In step 2, TRP sends PRS.

In step 3, a terminal device receives the positioning signal PRS and performs measurements on the PRS.

It is to be noted that the terminal device requires different measurement results for different positioning methods.

In step 4, the terminal device feeds back the measurement result to the LMF.

The terminal device feeds back the measurement result to the LMF through the base station.

In step 5, LMF calculates location related information.

It is to be noted that the above is a schematic flow diagram of the UE-assisted positioning method. For the UE-based positioning method, in the step 4 above, the terminal device calculates the location related information directly based on the measurement result, without the need to report the measurement result to the LMF and then have the same perform the calculation. In the UE-based positioning method, the terminal device needs to know location information corresponding to TRP(s), so the LMF needs to notify the terminal device of the location information corresponding to the TRP(s) in advance.

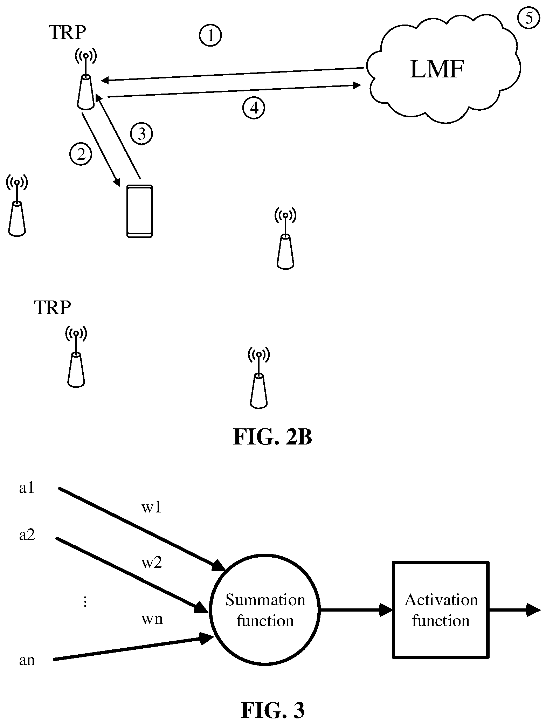

Additionally, referring to FIG. 2B, the uplink-based positioning method may include the following steps.

In step 1, LMF notifies TRP of a related configuration.

In step 2, a base station sends a related signaling to the terminal device.

In step 3, a terminal device sends a Sounding Reference Signal (SRS).

In step 4, the TRP measures the SRS and sends a measurement result to the LMF.

In step 5, the LMF calculates location related information.

In recent years, an artificial intelligence research, represented by neural networks, has achieved significant results in many fields and will play an important role in people's production and life for a long time in the future. A neural network is a computational model composed of a plurality of neuron nodes connected to each other, referring to the diagram of a neuron structure illustrated in FIG. 3. As illustrated in FIG. 3, the neuron structure may be connected to other neuron structures a1 to an. The transmission of signals between neuron structures may be affected by weights (for example, a weight value of a signal input by neuron structure a1 is w1), and each neuron structure may perform a weighted summation of a plurality of input signals and output through a specific activation function.

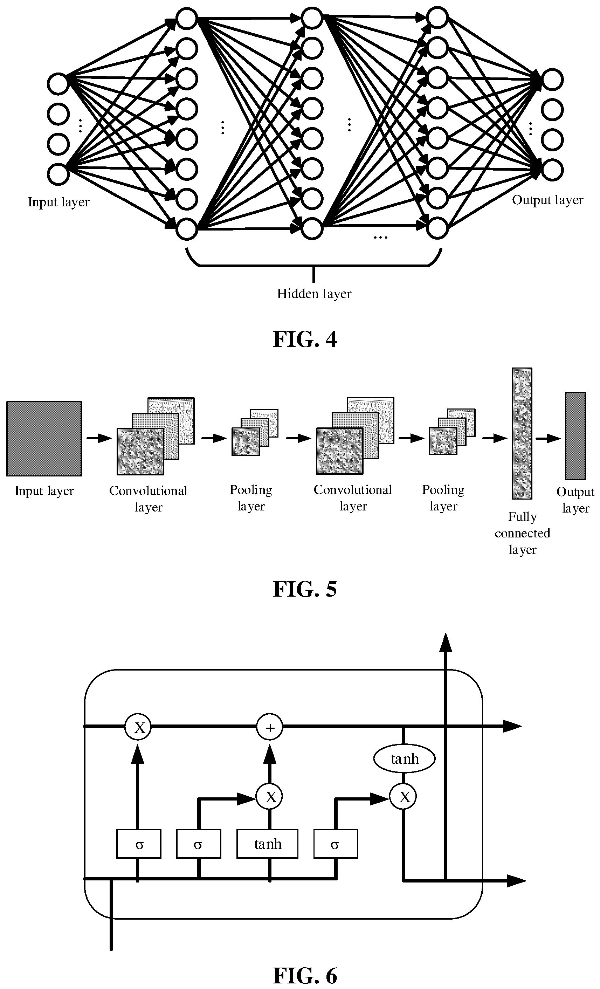

FIG. 4 is a structural diagram of a neural network provided by a related art. As illustrated in FIG. 4, the structure of the neural network may include: an input layer, hidden layers, and an output layer. As illustrated in FIG. 4, the input layer is responsible for receiving data, the hidden layer processes the data, and a final result is generated from the output layer. Each node represents a processing unit, which may be considered as simulating a neuron. A plurality of neurons form a layer of the neural network, and information transmission and processing across a plurality of layers construct the entire neural network.

With the continuous development of research on neural networks, deep learning algorithms for neural networks have been proposed in recent years. More hidden layers have been introduced. Through a layer-by-layer training of multi-hidden layer neural networks for feature learning, learning and processing capabilities of the neural networks have been improved greatly, and they have been widely used in pattern recognition, signal processing, optimization and combination, anomaly detection, etc.

Similarly, with the development of deep learning, Convolutional Neural Networks (CNNs) have also been further studied.

FIG. 5 is a structural diagram of a convolutional neural network provided by a related art. As illustrated in FIG. 5, the structure of the convolutional neural network may include: an input layer, a plurality of convolutional layers, a plurality of pooling layers, a fully connected layer, and an output layer. Through the introduction of the convolutional layers and the pooling layers, a dramatic increase in network parameters is effectively controlled, the number of parameters is limited, and characteristics of local structures are mined, thereby improving the robustness of the algorithms.

A Recurrent Neural Network has achieved remarkable results in the field of natural language processing, such as machine translation, speech recognition, etc. The Recurrent Neural Network is a type of neural network that models sequence data, which can remember information from past moments, and uses them in a calculation for current output. That is, nodes between hidden layers are no longer unconnected but connected, and the input to the hidden layers includes not only an input layer but also an output of the hidden layers at a previous moment.

FIG. 6 is a structural diagram of a Long Short-Term Memory (LSTM) network provided by a related art. LSTM is a commonly used type of recurrent neural network. Unlike the recurrent neural network that only considers the most recent state, LSTM may decide which states should be retained and which states should be forgotten, solving shortcomings of traditional recurrent neural networks in long-term memory.

In view of the significant success of AI technology or ML technology, such as the above neural network and deep learning, in computer vision, natural language processing, etc., the field of communications has begun to explore the use of AI/ML technologies to seek new technical approaches to address problems that traditional methods have struggled with.

In practical applications, AI/ML technologies may be used to achieve functions such as positioning of terminal devices and channel estimation. That is, locations of the terminal devices or channel estimation results are determined based on AI/ML models. When the AI/ML models are not suitable for a current scenario, that is, the processing accuracy of the AI/ML models does not meet actual needs, the AI/ML models need to be updated. The key to updating the AI/ML models is how to monitor the performance of the AI/ML models.

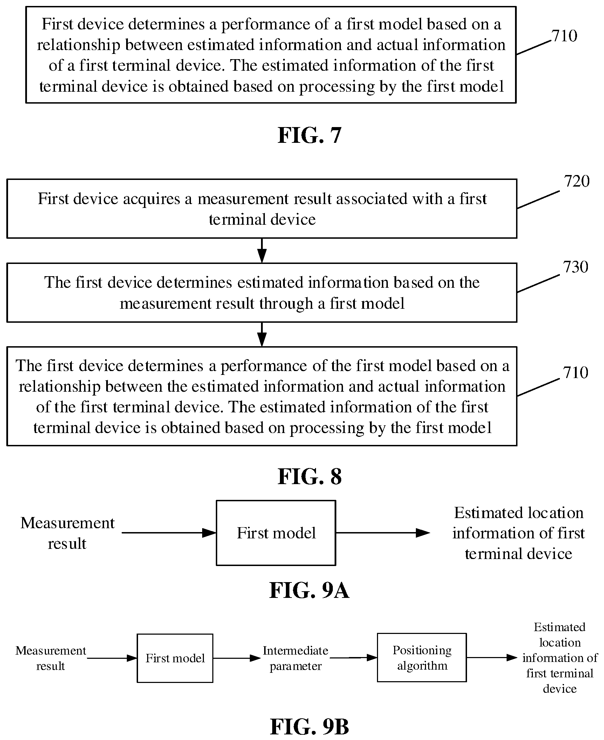

Based on this, the embodiments of the present disclosure provide a method for model monitoring. FIG. 6 is a flow diagram of the method for model monitoring provided by an embodiment of the present disclosure. As illustrated in FIG. 7, the method includes the following operation.

At block 710, a first device determines a performance of a first model based on a relationship between estimated information and actual information of a first terminal device. The estimated information of the first terminal device is obtained based on processing through the first model.

It is to be understood that the first model may be deployed in the first device. The first model may be a pre-trained AI/ML model, such as a neural network model, a CNN model, an LSTM model, etc., which is not limited by the embodiments of the present disclosure. The first model may be used to determine the estimated information of the first terminal device. The first model may process input information and output the estimated information of the first terminal device ultimately.

Optionally, the estimated information may be estimated location information of the first terminal device, or estimated channel state information between the first terminal device and the base station, etc., which is not limited by the embodiments of the present disclosure.

In addition, the actual information of the first terminal device may be stored in a local storage space of the first device, or the actual information of the first terminal device may be acquired from other devices.

Optionally, the actual information of the first terminal device may be actual location information of the first terminal device, or actual channel state information between the first terminal device and the base station, etc., which is not limited by the embodiments of the present disclosure.

In the embodiments of the present disclosure, the first device may compare the estimated information of the first terminal device determined by the first model with the actual information of the first terminal device, and determine the performance of the first model based on the relationship between the estimated information and the actual information. For example, if the estimated information is different from the actual information, it can be determined that the performance of the first model is poorer. If the estimated information is the same as the actual information, it can be determined that the performance of the first model is better. Optionally, if the difference between the estimated information and the actual information is large (for example, the difference is greater than the first threshold), it is determined that the performance of the first model is poorer. If the difference between the estimated information and the actual information is smaller (for example, the difference is less than the first threshold), it is determined that the performance of the first model is better. When it is determined that the performance of the first model is poorer, the first model may be updated, or switching of the first model may be performed.

It can be seen that in the method for model monitoring provided by the embodiments of the present disclosure, the first device can compare the estimated information calculated by the first model with the actual information, and determine the performance of the first model based on the relationship between the estimated information and the actual information, so that the first model is switched and updated timely when the performance of the first model does not meet actual requirements, thereby ensuring the normal operation of services.

Optionally, the first device may be a first terminal device, a first network device, or a second network device.

The first terminal device may be a terminal device for which the actual information is known. For example, the first terminal device may be a type of terminal device with a known location, such as a Positioning Reference Unit (PRU).

It is to be noted that the PRU may perform measurements related to downlink positioning (for example, a downlink signal time difference, a reference signal received power, a time difference between received signal and transmitted signal (Rx-Tx) on a UE side, etc.), and report these measurement results to a positioning server. In addition, the PRU may send an SRS, and the base station performs measurements on the SRS and reports uplink positioning measurement results (for example, an uplink relative arrival time, an uplink arrival angle, a time difference between Rx-Tx on a base station side, etc.).

The first network device may be an access network device, such as a base station, a micro base station, a TRP, etc., which is not limited by the embodiments of the present disclosure.

The second network device may be a core network device, such as a Location Management Function (LMF) network element, or other network elements configured with positioning management functions, which is not limited by the embodiments of the present disclosure.

In the embodiments of the present disclosure, when the first device is a first network device, the actual information of the first terminal device is sent by a second network device.

When the first device is the second network device, the actual information of the first terminal device is known information.

When the first device is the first terminal device, the actual information of the first terminal device may be known information or sent by the second network device.

For example, the second network device may locally store the actual information of the first terminal device, or the actual information of the first terminal device may be reported by the first terminal device to the second network device. In this way, when other devices need to perform model monitoring, the second network device can send the actual information of the first terminal device to other devices, so that other devices can adjust the first model.

Optionally, referring to FIG. 8, in an embodiment of the present disclosure, before the operation that the first device determines the performance of the first model based on the relationship between the estimated information and the actual information of the first terminal device in block 710, the method for model monitoring provided by the embodiment of the present disclosure may further include the following operations.

At block 720, the first device acquires a measurement result(s) associated with the first terminal device.

At block 730, the first device determines estimated information based on the measurement result(s) through the first model.

It is to be understood that the input of the first model may be the measurement result(s) associated with the first terminal device, and the output of the first model may be the estimated information of the first terminal device.

Before determining the estimated information of the first terminal device, the first device may acquire the measurement result(s) associated with the first terminal device. After obtaining the measurement result(s), the measurement result(s) is used as the input to the first model, and the output of the first model is the estimated information of the first terminal device.

For example, the measurement result(s) associated with the first terminal device may include a downlink measurement result, and/or an uplink measurement result. The first terminal device may perform downlink-related measurements and report the obtained downlink measurement result to the second network device. In addition, the first terminal device may also send an uplink reference signal, and the first network device performs measurements on the uplink reference signal sent by the first terminal device to obtain an uplink measurement result. In addition, the first network device may report the uplink measurement result to the second network device.

Optionally, the measurement result(s) may include one or more of the following:
a Channel Impulse Response (CIR), a Power Delay Profile (PDP), a Time of Arrival (ToA), an Uplink Time Difference of Arrival (UL TDoA), a Downlink Time Difference of Arrival (DL TDoA), an Uplink Angle-of-Departure (UL AoD), a Downlink Angle-of-Departure (DL AoD), a UL Relative Time of Arrival (UL RTOA), a DL Reference Signal Time Difference (DL RSTD), a Reference Signal Receiving Power (RSRP), an azimuth angle, or a zenith angle.

It is to be noted that the measurement result associated with the first terminal device may be a measurement result between the first terminal device and the first network device. Exemplarily, the measurement result may include the CIR, the PDP, the ToA, the UL TDoA, the DL TDoA, the UL AoD, the DL AoD, the UL RTOA, the DL RSTD, the RSRP, the azimuth angle, the zenith angle, etc. between the first terminal device and the TRP.

The measurement result(s) associated with the first terminal device may be for a single first network device or for a plurality of first network devices. That is, the number of the measurement results may include one or more. When a plurality of measurement results is included, the plurality of measurement results are measurement results between the first terminal device and the plurality of first network devices.

For example, the plurality of measurement results may correspond to n TRPs, where the plurality of measurement results may be CIRs of the first terminal device relative to the n TRPs, RSRPs of the first terminal device relative to the n TRPs, DL RSTDs of the first terminal device relative to the n TRPs, ToAs of the first terminal device relative to the n TRPs, AoDs of the first terminal device relative to the n TRPs. The number of DL TDOAs, RSRPs, DL RSTDs, TOAs, and AoDs corresponding to each TRP may be greater than 1.

Optionally, in an embodiment of the present disclosure, when the first device is the first network device and/or the second network device, before the operation that the first device acquires the measurement result(s) associated with the first terminal device in block 720, the method for model monitoring provided by the embodiments of the present disclosure may further include the following operation.

The first device sends first information to the first terminal device. The first information is used to configure related information for monitoring of the first model, and the measurement result(s) is obtained based on measurement of the related information.

It can be understood that before acquiring the measurement result(s), the first device may also configure related information for monitoring of the first model, so that related devices can perform measurements (for example, the first terminal device performs downlink-related measurements, and the first network device performs uplink-related measurements) based on the configured related information to obtain the above measurement result(s).

In a possible implementation, when the first device is the first network device, the first network device may receive the related information for monitoring of the first model sent by the second network device and forward the related information to the first terminal device. For example, the first network device may configure the related information for monitoring of the first model for the first terminal device through a high-layer signaling (for example, a RRC signaling) or a physical layer signaling (for example, downlink control information (DCI)), which is not limited by the embodiments of the present disclosure.

In another possible implementation, when the first device is the second network device, the second network device may configure the related information for monitoring of the first model for the first terminal device through a Lightweight Presentation Protocol (LPP). Optionally, the second network device may send the related information for monitoring of the first model to the first network device, and then the first network device forwards the related information to the first terminal device.

Optionally, the first information may include one or more of the following:
a reference signal type, a measurement type, or trigger information.

The trigger information is used to trigger monitoring for the performance of the first model.

Optionally, the reference signal type may include one or more of the following:
a Positioning Reference Signal (PRS), a Synchronization Signal and PBCH block (SSB), and a Sounding Reference Signal (SRS).

Optionally, the measurement type may include any one of the following:
a periodic measurement, an aperiodic measurement, a semi-persistent measurement, or a time window measurement.

For the periodic measurement, the first device may configure time periods where reference signals are measured during a monitoring process of the first model, as well as the number of measurements within each time period, etc, which is not limited by the embodiments of the present disclosure.

The aperiodic measurement may be understood as performing only a preset number of measurements on the reference signals. For the aperiodic measurement, the first device may configure the number of measurements to be performed on the reference signals.

For the semi-persistent measurement, the first device may configure a time duration of a persistent measurement, measurement periods within the time duration of the persistent measurement, the number of measurements within each measurement period, and the like.

For the time window measurement, the first device may configure a start position of a time window, a length of the time window, the number of measurements within the time window, and the like.

Optionally, in another embodiment of the present disclosure, when the first device is a first terminal device, before the operation that the first device acquires the measurement result(s) associated with the first terminal device in block 720, the method for model monitoring provided by the embodiments of the present disclosure may further include the following operation.

The first device receives first information sent by a second network device. The first information is used to configure related information for monitoring of the first model, and the measurement result(s) is obtained based on measurement of the related information.

It can be understood that before acquiring the measurement result(s), the first device may also configure related information for monitoring of the first model, so that related devices can perform measurements (for example, the first terminal device performs downlink-related measurements, and the first network device performs uplink-related measurements) based on the configured related information to obtain the aforementioned measurement result(s).

Optionally, the second network device may configure the related information for monitoring of the first model for the first terminal device through LPP. Optionally, the second network device may send the related information for monitoring of the first model to the first network device, and then the first network device forwards the related information to the first terminal device, which is not limited by the embodiments of the present disclosure.

Optionally, the first information may include one or more of the following:
a reference signal type, a measurement type, or trigger information. The trigger information is used to trigger monitoring for the performance of the first model.

Optionally, the reference signal type may include one or more of the following:
a PRS, an SSB, or an SRS.

Optionally, the measurement type may include any one of the following:
a periodic measurement, an aperiodic measurement, a semi-persistent measurement, and a time window measurement.

Illustrations are given below in combination with examples.

When the first device is a first network device (such as a TRP), in a possible implementation, the related information for monitoring of the first model that the first network device configures for the first terminal device may include the SRS. After receiving the related information for monitoring of the first model, the first terminal device may send SRS. In this way, the first network device can perform measurements on the uplink SRS sent by the first terminal device and obtain an uplink positioning-related measurement result. At this point, the measurement result may include one or more of a CIR, a PDP, a ToA, an UL TDoA, an UL AoD, an UL a RTOA, a RSRP, an azimuth angle, or a zenith angle.

As an example, when the positioning method combines the UL TDOA positioning method with the AI method, the measurement result of the first terminal device is the UL TDOA, RSRP, UL RTOA, etc., of the first terminal device relative to the first network device. The measurement result may also be a combination of UL TDOA and RSRP, or a combination of UL RTOA and RSRP. When the positioning method combines UL AoA positioning method with the AI method, the measurement result of the first terminal device is an uplink arrival angle of the first terminal device relative to the first network device, such as an azimuth angle and/or a zenith angle.

In another possible implementation, the related information for monitoring of the first model that the first network device configures for the first terminal device may include PRS and SSB. Based on the related information for monitoring of the first model, the first terminal device may perform measurements on the PRS or SSB sent by the first network device to obtain a downlink-related measurement result. Subsequently, the first terminal device may report the measurement result to the first network device. At this point, the measurement result may include one or more of the CIR, the PDP, the ToA, the DL TDoA, the DL AoD, the DL RSTD, the RSRP, the azimuth angle, or the zenith angle.

As an example, when the positioning method combines DL TDOA positioning method with the AI method, the measurement result of the first terminal device may be the DL TDOA, RSRP, DL RSTD, TOA, etc., of the first terminal device relative to the first network device. The measurement result may also be a combination of DL TDOA and RSRP, or a combination of DL RSTD and RSRP, or a combination of TOA and RSRP. When the positioning method combines DL AoD positioning method with the AI method, the measurement result of the first terminal device is the AoD of the first terminal device relative to the first network device.

Furthermore, after obtaining the measurement result(s) associated with the first terminal device, the first network device may input the measurement result(s) into the first model to obtain the estimated information.

It can be seen that when the first model is deployed on the first network device, characteristics of the first terminal device may be used to determine the performance of the current first model, so that the model is updated timely.

In other embodiments, when the first device is a second network device, in a possible implementation, the related information for monitoring of the first model that the second network device configures for the first terminal device may include PRS or SSB. The first terminal device may perform measurements on the PRS or SSB sent by the first network device to obtain a measurement result. The first terminal device may send the measurement result to the second network device. At this point, the measurement result may include one or more of the CIR, the PDP, the ToA, the DL TDoA, the DL AoD, the DL RSTD, the RSRP, the azimuth angle, and the zenith angle.

As an example, when the positioning method combines DL TDOA positioning method with the AI method, the measurement result of the first terminal device may be the DL TDOA, RSRP, DL RSTD, TOA, etc., of the first terminal device relative to the first network device. The measurement result may also be a combination of DL TDOA and RSRP, or a combination of DL RSTD and RSRP, or a combination of TOA and RSRP. When the positioning method combines DL AoD positioning method with the AI method, the measurement result of the first terminal device is the AoD of the first terminal device relative to the first network device.

In another possible implementation, the related information for monitoring of the first model that the second network device configures for the first terminal device may include SRS. The first terminal device may send SRS according to the related information for monitoring of the first model. In this way, the first network device can perform measurements on the SRS sent by the first terminal device and obtain an uplink-related measurement result. Subsequently, the first network device may forward the measurement result to the second network device. At this point, the measurement result may include one or more of the CIR, the PDP, the ToA, the UL TDoA, the UL AoD, the UL RTOA, the RSRP, the azimuth angle, and the zenith angle.

As an example, when the positioning method combines the UL TDOA positioning method with the AI method, the measurement result of the first terminal device is the UL TDOA, RSRP, UL RTOA, etc., of the first terminal device relative to the first network device. The measurement result may also be a combination of UL TDOA and RSRP, or a combination of UL RTOA and RSRP. When the positioning method combines UL AoA with the AI method, the measurement result of the first terminal device is an uplink arrival angle of the first terminal device relative to the first network device, such as the azimuth angle and/or the zenith angle.

Furthermore, after obtaining the measurement result(s) associated with the first terminal device, the second network device may input the measurement result(s) into the first model to obtain the estimated information.

Optionally, when the first device is a first terminal device, the first terminal device may perform measurements on the reference signal sent by the first network device and obtain a measurement result(s). The first terminal device may input the measurement result(s) into the first model directly to obtain the estimated information. In this scenario, the measurement result(s) may only include one or more of the CIR, the PDP, or the RSRP.

It is to be noted that the measurement behaviors in the aforementioned embodiments may be understood as monitoring for the performance of the first model.

The monitoring for the performance of the first model by the first device may be initiated by the device itself. For example, when the first device is a first terminal device, the first terminal device may measure the received reference signal actively to monitor the first model. The monitoring for the performance of the first model by the first device may also be triggered by other devices. For example, when the first device is the first terminal device, the first terminal device may receive related information for monitoring of the first model sent by the first network device and/or the second network device, to trigger the monitoring of the first model.

It is to be noted that the first model may be used to determine the estimated information of the first terminal device directly, or used to assist in determining the estimated information of the first terminal device. As an example, the first model is used as a positioning model for illustration. FIG. 9A illustrates a schematic diagram of a principle of direct positioning using a first model, where an input to the first model is the measurement result(s) in the aforementioned embodiments, and an output of the first model is estimated location information of the first terminal device. FIG. 9B illustrates a schematic diagram of a principle of assisted positioning using a first model, where the input to the first model is the measurement result(s), and the output of the first model may include an intermediate parameter. The intermediate parameter is processed in conjunction with a positioning algorithm to obtain the estimated location information of the first terminal device.

In some embodiments, the first device is a first terminal device, and the operation that the first device determines estimated information based on the measurement result(s) through the first model in block 730, may be further implemented by the following manner.

The first device determines the intermediate parameter based on the measurement result(s) through the first model;
the first device sends the intermediate parameter to the second network device; and
the first device receives the estimated information sent by the second network device.

Optionally, the intermediate parameter may include one or more of the following:
ToA, DL TDoA, DL AoD, DL RSTD, or a Line of Sight (LOS)/Non Line of Sight (NLOS) identification result.

In the embodiments of the present disclosure, due to limited processing resources and capabilities of the first terminal device, the first terminal device may use the first model to assist in determining the estimated information of the first terminal device. That is, the first device may use the first model to calculate some intermediate parameters, and send the intermediate parameters output by the first model to the second network device. In this way, the second network device may calculate the estimated information of the first terminal device based on the intermediate parameters and send the obtained estimated information to the first terminal device. Thus, the first terminal device can complete the determination of the estimated information. Therefore, the processing overhead of the first terminal device is reduced.

In an embodiment of the present disclosure, the operation that the first device determines the performance of the first model based on the relationship between the estimated information and the actual information of the first terminal device in block 710 may be implemented in the following manner.

When a difference value is less than or equal to a first threshold, it is determined by the first device that the first model is valid; and
when the difference value is greater than the first threshold, the first device switches the first model to a second model or the first device performs a traditional determination manner of the estimated information.

The difference value indicates a difference between the estimated information and the actual information.

It can be understood that the first device may compare the difference between the estimated information and the actual information to calculate the difference value between the estimated information and the actual information of the first terminal device. As an example, the estimated information is estimated location information of the first terminal device, and the actual information is actual location information of the first terminal device. The first device may calculate a distance between the estimated location information and the actual location information, and the difference value may be understood as the distance between the estimated location information and the actual location information.

If the difference value is smaller, for example, less than or equal to the first threshold, it indicates that the estimated information calculated by the first model is accurate, and the performance of the first model is better. Thus, there is no need to perform model switching, and the first model can continue to be used for service processing.

If the difference value is larger, for example, greater than the first threshold, it indicates that the estimated information calculated by the first model is inaccurate, and the performance of the first model is poorer, which can no longer meet current demands. Thus, it is necessary to perform switching of the first model or perform the traditional determination manner of estimated information.

Optionally, the first threshold may be determined based on one or more of a configuration from a network device, a preset rule, or a protocol definition.

When the first device is the first terminal device or the first network device, the second network device may configure the first threshold for the first terminal device or the first network device. The second network device may configure the first threshold for the first terminal device through the LPP protocol; or the second network device may configure the first threshold for the first network device, and then the first network device may configure the first threshold for the first terminal device through a higher-layer signaling or a physical layer signaling.

In addition, the first device may calculate the first threshold according to the preset rule. The protocol definition may be a value specified by a protocol, for example, the first threshold may be 0.1, 0.2, etc, which is not limited by the embodiments of the present disclosure.

Optionally, the first device may switch the first model to a second model. The second model may be a new model formed after model parameters in the first model are updated. The second model may also be a model obtained through offline training, a model obtained through online training, or a model stored in a model pool, which is not limited by the embodiments of the present disclosure.

Optionally, if the first model is a positioning model, the traditional determination manner of the estimated information may be a traditional positioning manner, such as using the Chan algorithm, Taylor expansion, or other algorithms to estimate the location of the terminal device.

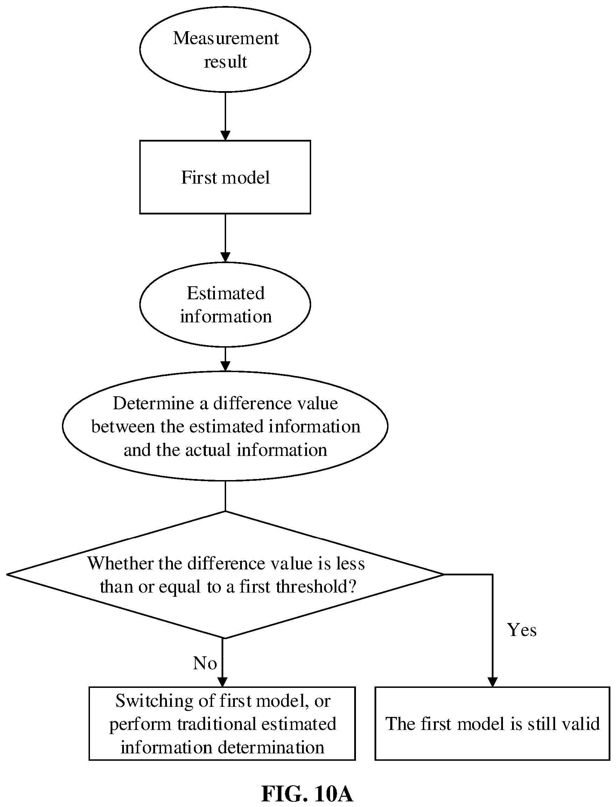

As an example, referring to FIG. 10A, when the first device is an LMF/TRP, the LMF/TRP may acquire a measurement result of the first terminal device and input the measurement result into the first model. The first model may output the estimated information of the first terminal device. Then, the LMF/TRP may calculate a difference value between the estimated information and the actual information. If the difference value is less than or equal to the first threshold, it is determined that the first model is still valid. If the difference value is greater than the first threshold, switching of the first model is performed or the traditional determination manner of estimated information is performed.

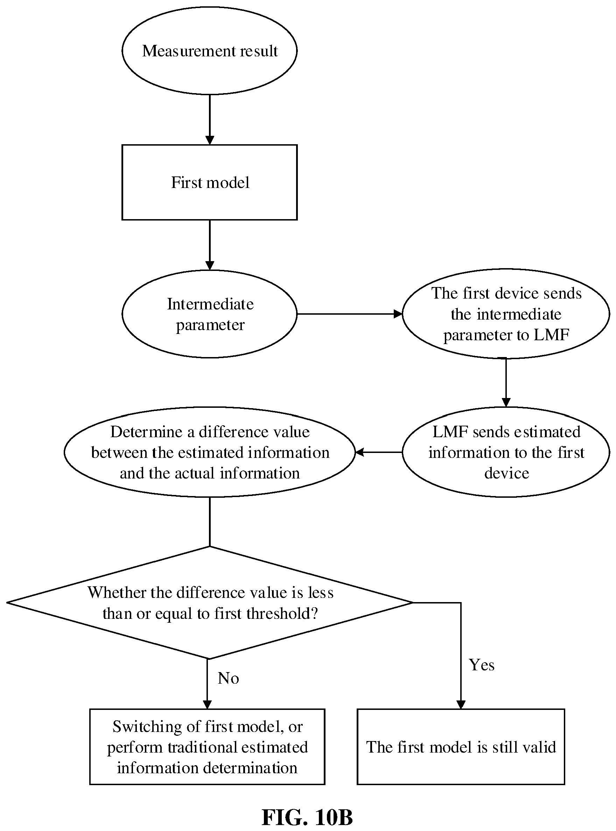

Referring to FIG. 10B, when the first device is the first terminal device, the first terminal device may acquire a measurement result of the first terminal device and input the measurement result into the first model. The first model may output an intermediate parameter. The first terminal device may send the intermediate parameter to LMF for processing. After determining estimated information based on the intermediate parameter, the LMF sends the estimated information to the first terminal device. In this way, the first terminal device can calculate the difference value between the estimated information and the actual information. If the difference value is less than or equal to the first threshold, it is determined that the first model is still valid. If the difference value is greater than the first threshold, switching of the first model is performed or the traditional determination manner of the estimated information is performed.

In summary, considering that actual information of ordinary terminal devices is not easy to obtain, it is difficult to monitor the performance of their own models for the ordinary terminal devices. Thus, a manner that the actual information and estimated information of the first terminal device are used to monitor the first model, and a model monitoring result is forwarded through the network device is adopted to determine the performance of the first model.

In another embodiment of the present disclosure, the operation that the first device determines the performance of the first model according to the relationship between the estimated information and the actual information of the first terminal device in block 710, may be further implemented in the following manner.

It is determined by the first device that the first model is valid, when the number of times that a difference value is less than or equal to a first threshold within a first duration is greater than a second threshold; or
the first device switches the first model to a second model or the first device performs a traditional determination manner of the estimated information, when the number of times that the difference value is less than or equal to the first threshold within the first duration is less than or equal to the second threshold.

The difference value indicates a difference between the estimated information and the actual information.

It is to be understood that in order to avoid frequent model switching by the first device, the first device may monitor difference values between a plurality of pieces of estimated information output by the first model and the actual information over a period of time respectively. If the number of times that a difference value is less than or equal to the first threshold is greater than a second threshold, it is determined that the first model is valid. If the number of times that the difference value is less than or equal to the first threshold is less than or equal to the second threshold, the first model is switched by the first device to the second model, or the first device performs the traditional determination manner of the estimated information.

Optionally, the first threshold and/or the second threshold may be determined based on one or more of a configuration from a network device, a preset rule, or a protocol definition.

Optionally, the first duration may be a time length defined by the protocol, such as 2 seconds, 5 seconds, etc.

Optionally, the first duration may be further determined based on one or more of the following:
a period for monitoring of the first model; or
a time window for monitoring of the first model.

It is to be understood that if the second network device configures a period for monitoring of the first model or a time window for monitoring of the first model, the first duration may be determined by the period and the time window configured by the second network device. As an example, the first duration may be the period for monitoring of the first model or a multiple of the period, or the first duration may be a length of the time window for monitoring of the first model or a multiple of the time window length, which is not limited by the embodiments of the present disclosure.

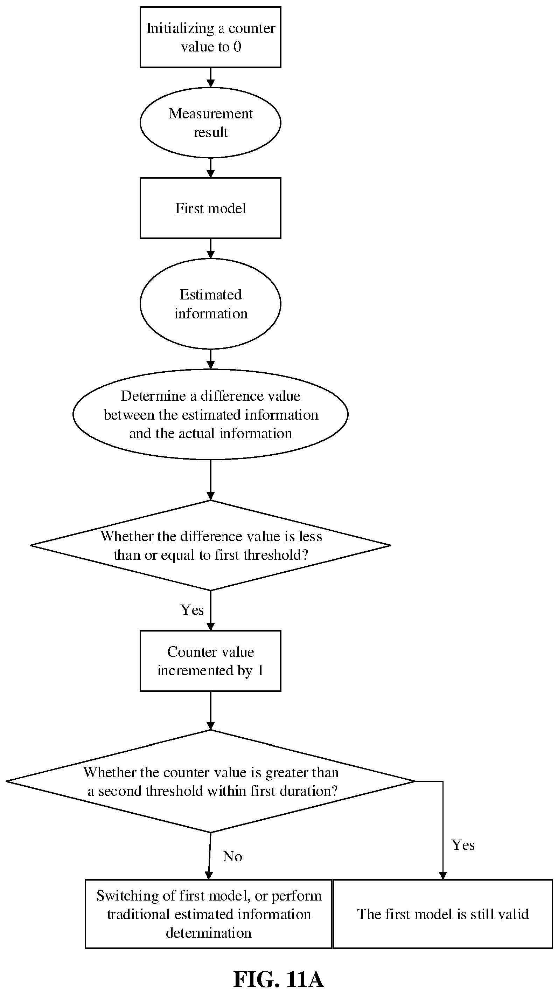

As an example, referring to FIG. 11A, when the first device is an LMF/TRP, the LMF/TRP may first initialize a counter value to 0. Then, the LMF/TRP may acquire a measurement result of the first terminal device and input the measurement result into the first model. The first model may output estimated information of the first terminal device. Then, the LMF/TRP may calculate a difference value between the estimated information and the actual information. If the difference value is less than or equal to the first threshold, the counter value is incremented by 1. If the counter value is greater than the second threshold within the first duration, it is determined that the first model is still valid. If the counter value is less than or equal to the first threshold, switching of the first model is performed or the traditional determination manner of the estimated information is performed.

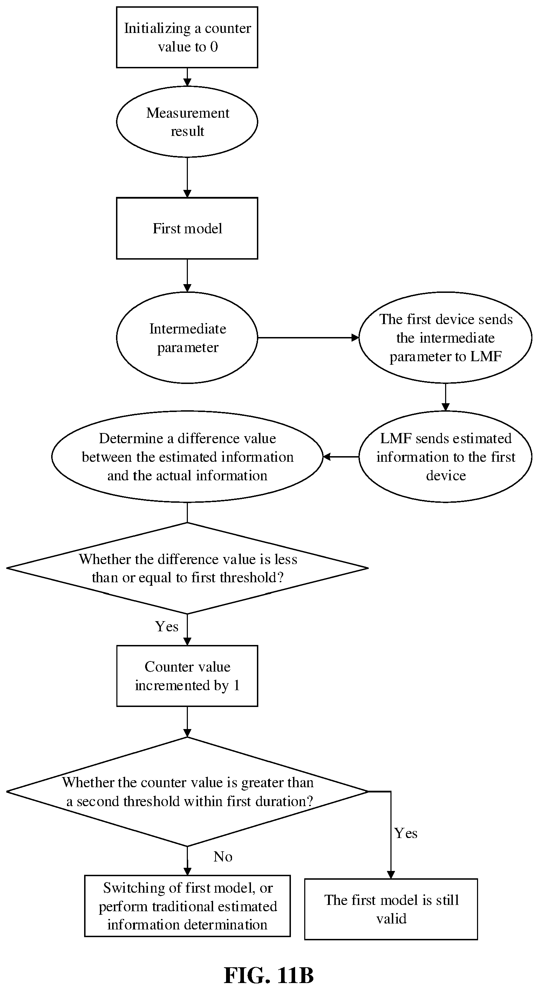

As illustrated in FIG. 11B, when the first device is the first terminal device, the first terminal device may initialize the counter value to 0. Then, the first terminal device may acquire a plurality of measurement results within the first duration and input each measurement result into the first model. The first model may output an intermediate parameter. The first terminal device may send the intermediate parameter to the LMF for processing. After determining the estimated information based on the intermediate parameter, the LMF sends the estimated information to the first terminal device. In this way, the first terminal device can calculate the difference value between the estimated information and the actual information. If the difference value is less than or equal to the first threshold, the counter value is incremented by 1. When the first duration is reached, if the counter value is greater than the second threshold, it is determined that the first model is still valid. If the counter value is less than or equal to the first threshold, switching of the first model is performed or the traditional determination manner of the estimated information is performed.

In summary, the first device may monitor difference values between each of a plurality of pieces of estimated information output by the first model and the actual information over a period of time. If the number of times that a difference value is less than or equal to the first threshold is greater than the second threshold, it is determined by the first device that the first model is valid. If the number of times that the difference value is less than or equal to the first threshold is less than or equal to the second threshold, the first device switches the first model to the second model, or the first device performs the traditional determination manner of the estimated information. Therefore, frequent model switching by the first device is avoided and the stability during service processing is enhanced.

Optionally, after switching the first model to the second model or performing the traditional determination manner of the estimated information, the first device may also inform other devices of the related information of model switching, so that related devices make adjustments timely.

In some embodiments, the first device is the first network device and/or the second network device, after switching the first model to the second model or performing the traditional determination manner of the estimated information, the following operation may be performed.

The first device sends second information to a terminal device(s), the second information is used to indicate the second model or the traditional determination manner of the estimated information. The terminal devices include the first terminal device.

It is to be understood that the first network device and/or the second network device may send the second information to all terminal devices within a coverage area of the network, to indicate that the second model or the traditional manner will be used subsequently to determine estimated information. Accordingly, the terminal devices may adaptively adjust the reference signals measured during the model monitoring process, the types of monitoring, and other information based on the second information.

In some embodiments, the first device is the first terminal device. After switching the first model to the second model or performing the traditional determination of the estimated information, the following operation may also be performed.

The first device sends second information to a second network device. The second information is used to indicate the second model or the traditional determination manner of the estimated information.

It can be understood that when the first device is the first terminal device, the first terminal device may send a switching result of the first model to the second network device. In this way, the second network device may also forward the second information to all terminal devices within a coverage area of the network. Accordingly, the terminal devices can adaptively adjust the reference signals measured during the model monitoring process, the types of monitoring, and other information based on the second information.

Optionally, the second information may include one or more of the following:
identification information of the second model;
reference signal configuration information associated with the second model;
identification information of the traditional determination manner of the estimated information; or
reference signal configuration information associated with the traditional determination manner of the estimated information.

It is to be noted that for different models and different determination manners of estimated information, reference signals that the terminal devices need to measure are different. Based on this, when a model for determining estimated information changes, the first network device and/or the second network device may inform the terminal devices of identification information of a switched second model or reference signal configuration information associated with the second model. When it is determined that the traditional determination manner of estimated information is performed, the first network device and/or the second network device may inform the terminal devices of the identification information of the traditional determination manner of the estimated information or the reference signal configuration information associated with the traditional determination manner of the estimated information.

Preferred embodiments of the present disclosure have been described in detail with reference to the accompanying drawings, but the present disclosure is not limited to the specific details of the above embodiments. Within the scope of the technical concept of the present disclosure, various simple modifications can be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure. For another example, on the premise of no conflict, various embodiments described in the present disclosure and/or the technical features in each embodiment can be arbitrarily combined with the related art, and the technical solution obtained after combination should also fall within the scope of protection of the present disclosure.

It is to be understood that in various method embodiments of the present disclosure, the size of the sequence numbers of the above-mentioned processes does not mean the order of execution, and the execution order of each process should be determined by its function and inherent logic, and should not be limited in any way to the implementation process of the embodiments of the present disclosure.

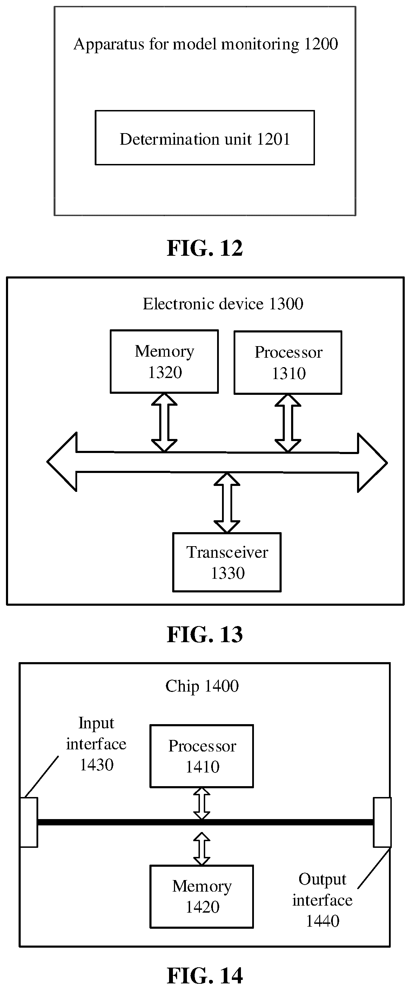

FIG. 12 is a structural composition diagram of an apparatus for model monitoring 1200 provided by an embodiment of the present disclosure, and the apparatus for model monitoring is applied to a first device. As illustrated in FIG. 12, the apparatus for model monitoring 1200 includes a determination unit 1201.

The determination unit 1201 is configured to determine a performance of a first model based on a relationship between estimated information and actual information of a first terminal device. The estimated information of the first terminal device is obtained based on processing through the first model.

Optionally, the apparatus for model monitoring 1200 further includes an acquisition unit, and the acquisition unit is configured to acquire a measurement result(s) associated with the first terminal device;

The determination unit 1201 is further configured to determine the estimated information based on the measurement result(s) through the first model.

Optionally, the first device is a first network device and/or a second network device. The apparatus for model monitoring 1200 may further include a transceiver unit, and the transceiver unit is configured to send first information to the first terminal device. The first information is used to configure related information for monitoring of the first model, and the measurement result(s) is obtained based on measurement of the related information.

Optionally, the transceiver unit is further configured to receive first information sent by a second network device. The first information is used to configure related information for monitoring of the first model, and the measurement result(s) is obtained based on measurement of the related information.

Optionally, the first information includes one or more of the following:
a reference signal type, a measurement type, or trigger information, where the trigger information is used to trigger monitoring for the performance of the first model.

Optionally, the reference signal type includes:
a Positioning Reference Signal (PRS), a Synchronization Signal and PBCH block (SSB), and a Sounding Reference Signal (SRS).

Optionally, the measurement type includes:
a periodic measurement, an aperiodic measurement, a semi-persistent measurement, and a time window measurement.

Optionally, the number of the measurement results is one, and the measurement result is a measurement result between the first terminal device and a first network device; or
the measurement results includes a plurality of measurement results, and the plurality of measurement results are measurement results between the first terminal device and a plurality of first network devices.

Optionally, the measurement result(s) includes one or more of the following:
a Channel Impulse Response (CIR), a Power Delay Profile (PDP), a Time of Arrival (ToA), an Uplink Time Difference of Arrival (UL TDoA), a Downlink Time Difference of Arrival (DL TDoA), an Uplink Angle-of-Departure (UL AoD), a Downlink Angle-of-Departure (DL AoD), a UL Relative Time of Arrival (UL RTOA), a DL Reference Signal Time Difference (DL RSTD), a Reference Signal Receiving Power (RSRP), an azimuth angle, or a zenith angle.

Optionally, when the first device is a second network device, the measurement result(s) includes one or more of the following:
a CIR, a PDP, a ToA, a DL TDoA, a DL AoD, a DL RSTD, a RSRP, an azimuth angle, or a zenith angle.

Optionally, when the first device is a first network device, the measurement result includes one or more of the following:
a CIR, a PDP, a ToA, an UL TDoA, an UL AoD, an UL RTOA, a RSRP, an azimuth angle, or a zenith angle.

Optionally, when the first device is a first terminal device, the measurement result includes one or more of the following:
a CIR, a PDP, or a RSRP.

Optionally, the first device is the first terminal device, and the determining unit 1201 is further configured to determine an intermediate parameter based on the measurement result(s) through the first model;

The transceiver unit is further configured to send the intermediate parameter to a second network device and receive the estimated information sent by the second network device.

Optionally, the intermediate parameter includes one or more of the following:
a ToA, a DL TDoA, a DL AoD, a DL RSTD, or a Line of Sight (LOS)/Non Line of Sight (NLOS) identification result.

Optionally, the determination unit 1201 is further configured to determine that the first model is valid when a difference value is less than or equal to a first threshold; and switch the first model to a second model or perform a traditional determination manner of the estimated information when the difference value is greater than the first threshold.

The difference value indicates a difference between the estimated information and the actual information.

Optionally, the determination unit 1201 is further configured to: determine that the first model is valid, when a number of times that a difference value is less than or equal to a first threshold within a first duration is greater than a second threshold; or
switch the first model to a second model or perform a traditional determination manner of the estimated information, when the number of times that the difference value is less than or equal to the first threshold within the first duration is less than or equal to the second threshold.

The difference value indicates a difference between the estimated information and the actual information.

Optionally, the first duration is determined based on one or more of the following:
a period for monitoring of the first model; or
a time window for monitoring of the first model.

Optionally, the first threshold and/or the second threshold are determined based on at least one of the following:
a configuration from a network device, a preset rule, or a protocol definition.

Optionally, the transceiver unit is further configured to send second information to a terminal device. The second information is used to indicate the second model or the traditional determination manner of the estimated information.

The terminal device includes the first terminal device.

Optionally, the transceiver unit is further configured to send second information to a second network device. The second information is used to indicate the second model or the traditional determination manner of the estimated information.

Optionally, the second information includes one or more of the following:
identification information of the second model;
reference signal configuration information associated with the second model;
identification information of the traditional determination manner of the estimated information; or
reference signal configuration information associated with the traditional determination manner of the estimated information.

Optionally, when the first device is a first network device, the actual information of the first terminal device is sent by a second network device;
when the first device is the second network device, the actual information of the first terminal device is known information;
when the first device is the first terminal device, the actual information of the first terminal device is known information or is sent by the second network device.

Optionally, the first network device is an access network device, and the second network device is a core network device.

Optionally, the first network device is a Transmission/Reception Point (TRP), and the second network device is a Location Management Function (LMF) network element.

Optionally, the estimated information is estimated location information, and the actual information is actual location information.

It will be understood by those skilled in the art that the above description of the apparatus for model monitoring of the embodiment of the present disclosure may be understood with reference to the description of the method for model monitoring of the embodiment of the present disclosure.

FIG. 13 is a schematic structural diagram of an electronic device 1300 provided by an embodiment of the present disclosure. The electronic device may be a first device. As illustrated in FIG. 13, the electronic device 1300 includes a processor 1310, which may call and execute a computer program from a memory to implement the method in the embodiments of the present disclosure.

Optionally, as illustrated in FIG. 13, the electronic device 1300 may also include a memory 1320. The processor 1310 may call and execute a computer program from the memory 1320 to implement the method in the embodiments of the present disclosure.

The memory 1320 may be a separate device independent of the processor 1310 or may be integrated in the processor 1310.

Optionally, the electronic device 1300 may be specifically the first device of the embodiments of the present disclosure, and the electronic device 1300 may implement corresponding processes implemented by the first device in various methods of the embodiments of the present disclosure, which will not be repeated here for the sake of brevity.

Optionally, the electronic device 1300 may be specifically the second device of the embodiments of the present disclosure, and the electronic device 1300 may implement corresponding processes implemented by the second device in various methods of the embodiments of the present disclosure, which will not be repeated here for the sake of brevity.

Optionally, the electronic device 1300 may be specifically the third device of the embodiments of the present disclosure, and the electronic device 1300 may implement corresponding processes implemented by the third device in various methods of the embodiments of the present disclosure, which will not be repeated here for the sake of brevity.

FIG. 14 is a schematic structural diagram of a chip according to an embodiment of the present disclosure. As illustrated in FIG. 14, a chip 1400 includes a processor 1410, which can call and execute a computer program from a memory to implement the method in the embodiments of the present disclosure.

Optionally, as illustrated in FIG. 14, the chip 1400 may also include a memory 1420. The processor 1410 may call and execute a computer program from the memory 1420 to implement the method in the embodiments of the present disclosure.

The memory 1420 may be a separate device independent of the processor 1410 or may be integrated in the processor 1410.

Optionally, the chip 1400 may also include an input interface 1430. The processor 1410 may control the input interface 1430 to communicate with other devices or chips, and in particular to obtain information or data sent by other devices or chips.

Optionally, the chip 1400 may also include an output interface 1440. The processor 1410 may control the output interface 1440 to communicate with other devices or chips, and in particular to output information or data to other devices or chips.

Optionally, the chip may be applied to be the first device of the embodiments of the present disclosure, and the chip may implement corresponding processes implemented by the first device in various methods of the embodiments of the present disclosure, which will not be repeated here for the sake of brevity.

Optionally, the chip may be applied to be the second device of the embodiments of the present disclosure, and the chip may implement corresponding processes implemented by the second device in various methods of the embodiments of the present disclosure, which will not be repeated here for the sake of brevity.

Optionally, the chip may be applied to be the third device of the embodiments of the present disclosure, and the chip may implement corresponding processes implemented by the third device in various methods of the embodiments of the present disclosure, which will not be repeated here for the sake of brevity.

It is to be understood that the chip referred to in the embodiments of the present disclosure may also be referred to as a system-level chip, a system chip, a chip system or a system-on-chip or the like.

It is to be understood that the processor may be an integrated circuit chip having signal processing capability. In implementation, the actions of the above method embodiments may be accomplished by integrated logic circuitry of hardware in processor or instructions in the form of software. The processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program.

Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

Optionally, the computer-readable storage medium may be applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program product, which includes computer program instructions.

Optionally, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

Optionally, the computer program product may be applied to the mobile terminal/terminal device of the embodiments of the present disclosure, and the computer program instructions cause a computer to implement corresponding processes implemented by the mobile terminal/terminal device in the methods of the embodiments of the present disclosure, which will not be repeated here for the sake of brevity.

In an embodiment of the present disclosure, there is further provided a computer program.

Optionally, the computer program may be applied to the network device of the embodiments of the present disclosure, and the computer program, when running on a computer, causes the computer to implement corresponding processes implemented by the network device in the methods of the embodiments of the present disclosure, which will not be repeated here for the sake of brevity.

Optionally, the computer program may be applied to the mobile terminal/terminal device of the embodiments of the present disclosure, and the computer program, when running on a computer, causes the computer to implement corresponding processes implemented by the mobile terminal/terminal device in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, a plurality of units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions can be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A method for model monitoring, comprising:
determining, by a first device, a performance of a first model based on a relationship between estimated information and actual information of a first terminal device, wherein the estimated information of the first terminal device is obtained based on processing through the first model.

2. The method of claim 1, wherein before determining, by the first device, the performance of the first model based on the relationship between the estimated information and the actual information of the first terminal device, the method further comprises:
acquiring, by the first device, a measurement result(s) associated with the first terminal device; and
determining, by the first device through the first model, the estimated information based on the measurement result(s).

3. The method of claim 2, wherein the first device is a first network device and/or a second network device, and the method further comprises:
sending, by the first device, first information to the first terminal device, wherein the first information is used to configure related information for monitoring of the first model, and the measurement result(s) is obtained based on measurement of the related information.

4. The method of claim 2, wherein the first device is the first terminal device, and the method further comprises:
receiving, by the first device, first information sent by a second network device, wherein the first information is used to configure related information for monitoring of the first model, and the measurement result(s) is obtained based on measurement of the related information.

5. The method of claim 3 or 4, wherein the first information comprises one or more of the following:
a reference signal type, a measurement type, or trigger information, wherein the trigger information is used to trigger monitoring for the performance of the first model.

6. The method of claim 5, wherein the reference signal type comprises:
a positioning reference signal (PRS), a synchronization signal and PBCH block (SSB), and a sounding reference signal (SRS).

7. The method of claim 5, wherein the measurement type comprises:
a periodic measurement, an aperiodic measurement, a semi-persistent measurement, and a time window measurement.

8. The method of any one of claims 2-7, wherein the measurement result(s) comprises one measurement result, and the measurement result is a measurement result between the first terminal device and a first network device; or
the measurement result(s) comprises a plurality of measurement results, and the plurality of measurement results are measurement results between the first terminal device and a plurality of first network devices.

9. The method of any one of claims 2-8, wherein the measurement result(s) comprises one or more of the following:
a channel impulse response (CIR), a power delay profile (PDP), a time of arrival (ToA), an uplink time difference of arrival (UL TDoA), a downlink time difference of arrival (DL TDoA), an uplink angle-of-departure (UL AoD), a downlink angle-of-departure (DL AoD), a UL relative time of arrival (UL RTOA), a DL reference signal time difference (DL RSTD), a reference signal receiving power (RSRP), an azimuth angle, or a zenith angle.

10. The method of claim 8, wherein when the first device is a core network device, the measurement result(s) comprises one or more of the following:
a CIR, a PDP, a ToA, a DL TDoA, a DL AoD, a DL RSTD, a RSRP, an azimuth angle, or a zenith angle.

11. The method of claim 8, wherein when the first device is an access network device, the measurement result(s) comprises one or more of the following:
a CIR, a PDP, a ToA, an UL TDoA, an UL AoD, an UL RTOA, a RSRP, an azimuth angle, or a zenith angle.

12. The method of claim 8, wherein when the first device is the first terminal device, the measurement result(s) comprises one or more of the following:
a CIR, a PDP, or a RSRP.

13. The method of any one of claims 2-12, wherein the first device is the first terminal device, and determining, by the first device through the first model, the estimated information based on the measurement result(s) comprises:
determining, by the first device through the first model, an intermediate parameter based on the measurement result(s);
sending, by the first device, the intermediate parameter to a second network device; and
receiving, by the first device, the estimated information sent by the second network device.

14. The method of claim 13, wherein the intermediate parameter comprises one or more of the following:
a ToA, a DL TDoA, a DL AoD, a DL RSTD, or a Line of Sight (LOS)/Non Line of Sight (NLOS) identification result.

15. The method of any one of claims 1-14, wherein determining, by the first device, the performance of the first model based on the relationship between the estimated information and the actual information of the first terminal device comprises:
determining that the first model is valid when a difference value is less than or equal to a first threshold; or
switching the first model to a second model or performing a traditional determination manner of the estimated information, when the difference value is greater than the first threshold,
wherein the difference value indicates a difference between the estimated information and the actual information.

16. The method of any one of claims 1-14, wherein determining, by the first device, the performance of the first model based on the relationship between the estimated information and the actual information of the first terminal device comprises:
determining that the first model is valid, when a number of times that a difference value is less than or equal to a first threshold within a first duration is greater than a second threshold; or
switching the first model to a second model or performing a traditional determination manner of the estimated information, when the number of times that the difference value is less than or equal to the first threshold within the first duration is less than or equal to the second threshold,
wherein the difference value indicates a difference between the estimated information and the actual information.

17. The method of claim 16, wherein the first duration is determined based on one or more of the following:
a period for monitoring of the first model; or
a time window for monitoring of the first model.

18. The method of any one of claims 15-17, wherein the first threshold and/or the second threshold are determined based on at least one of the following:
a configuration from a network device, a preset rule, or a protocol definition.

19. The method of any one of claims 15-18, wherein the first device is a first network device and/or a second network device, and the method further comprises: after switching the first model to the second model or performing the traditional determination manner of the estimated information,
sending, by the first device, second information to a terminal device, wherein the second information is used to indicate the second model or the traditional determination manner of the estimated information,
wherein the terminal device comprises the first terminal device.

20. The method of any one of claims 15-18, wherein the first device is the first terminal device, and the method further comprises: after switching the first model to the second model or performing the traditional determination manner of the estimated information, the method further comprises:
sending, by the first device, second information to a second network device, wherein the second information is used to indicate the second model or the traditional determination manner of the estimated information.

21. The method of claim 19 or 20, wherein the second information comprises one or more of the following:
identification information of the second model;
reference signal configuration information associated with the second model;
identification information of the traditional determination manner of the estimated information; or
reference signal configuration information associated with the traditional determination manner of the estimated information.

22. The method of any one of claims 1-21, wherein
when the first device is a first network device, the actual information of the first terminal device is sent by a second network device;
when the first device is the second network device, the actual information of the first terminal device is known information;
when the first device is the first terminal device, the actual information of the first terminal device is known information or is sent by the second network device.

23. The method of claim 22, wherein the first network device is an access network device, and the second network device is a core network device.

24. The method of claim 23, wherein the first network device is a Transmission/Reception Point (TRP), and the second network device is a Location Management Function (LMF) network element.

25. The method of any one of claims 1-24, wherein the estimated information is estimated location information, and the actual information is actual location information.

26. An apparatus for model monitoring, applied to a first device, comprising:
a determination unit, configured to determine a performance of a first model based on a relationship between estimated information and actual information of a first terminal device, wherein the estimated information of the first terminal device is obtained based on processing through the first model.

27. A device, comprising: a memory, a processor, and a transceiver,
wherein the transceiver is configured to implement communication with a terminal device;
the memory stores a computer program that is capable of running on the processor, and
the processor is configured to, in conjunction with the transceiver, execute the computer program to implement the method of any one of claims 1 to 25.

28. A computer storage medium, having stored one or more programs, which are capable of being executed by one or more processors to implement the method of any one of claims 1 to 25.

29. A chip, comprising: a processor, configured to call and execute a computer program from a memory to cause a device equipped with the chip to implement the method of any one of claims 1 to 25.

30. A computer program product, comprising a computer storage medium, wherein the computer storage medium stores a computer program, the computer program comprises instructions that are capable of being executed by at least one processor, and the instructions, when being executed by the at least one processor, implements the method of any one of claims 1 to 25.

31. A computer program, which causes a computer to implement the method of any one of claims 1 to 25.
